# EUROPÄISCHE PATENTANMELDUNG

(11) **EP 2 980 661 A1**
(43) Veröffentlichungstag der Anmeldung: **03.02.2016**
(21) Anmeldenummer: 14179159.0
(22) Anmeldetag: 30.07.2014
(51) Int. Cl.: G05B 17/02, G05B 19/05

(54) **Elektronisches Steuerungsgerät**

(71) Anmelder: Siemens Aktiengesellschaft, 80333 München (DE)
(72) Erfinder: Ermler, Rene, 91058 Erlangen (DE); Matis, Andreas, 91054 Erlangen (DE); Quiros Araya, Gustavo, 90419 Nürnberg (DE)

(57) **Zusammenfassung**

Die vorliegende Erfindung betrifft ein Elektronisches Steuerungsgerät (100) mit einer Steuereinrichtung (110) zum Ablauf eines Steuerungsprogramms zur Steuerung einer Anlage (200) und mit einer Anlagen-Schnittstelle (117, 130) zur Ausgabe von Anlagen-Steuerdaten an die Anlage (200) und zum Empfang von Anlagendaten von der Anlage (200),
wobei das Steuerungsgerät (100) zum Betrieb in einem ein- und ausschaltbaren Emulationsmodus zur Steuerung einer Anlagensimulation (210) durch das Steuerungsprogramm eingerichtet und ausgebildet ist, und wobei in dem Emulationsmodus eine von der Anlagen-Schnittstelle (117, 130) separate Emulations-Schnittstelle (119) zur Ausgabe der Anlagen-Steuerdaten und zum Empfang von Daten von der Anlagensimulation (210) vorgesehen ist.

## Beschreibung

Die vorliegende Erfindung betrifft ein elektronisches Steuerungsgerät mit einer Steuereinrichtung zum Ablauf eines Steuerungsprogramms zur Steuerung einer Anlage und mit einer Anlagen-Schnittstelle zur Ausgabe von Anlagen-Steuerdaten an die Anlage und zum Empfang von Anlagendaten von der Anlage.

Derartige elektronische Steuerungsgeräte sind aus dem Stand der Technik bekannt.

So offenbart beispielsweise die europäische Offenlegungsschrift EP 20648103 A2 einen Steuerungsrechner für ein Gesamtsystem, welches aus verschiedenen Sub-Systemen besteht. Dabei steuert und koordiniert der Zentralrechner die einzelnen Einheiten der jeweiligen Subsysteme. Weiterhin wird in dieser europäischen Offenlegungsschrift offenbart, dass die einzelnen Komponenten des Systems inklusive des Zentralrechners jeweils durch entsprechende Simulatoren ersetzt werden können, um das Gesamtsystem schon vorab testen zu können.

Es ist ein Nachteil des Standes der Technik, dass die entsprechende Simulation relativ aufwändig ist, da für jede zu simulierende Einheit ein entsprechender Simulator geschaffen werden muss, wobei die jeweiligen Simulationen mit real ablaufenden Komponenten des Systems beispielsweise bezüglich des zeitlichen Ablaufs harmonieren müssen.

Daher ist es eine Aufgabe der vorliegenden Erfindung, eine weniger aufwändige, einfachere, geschicktere oder effizientere Simulation eines Automatisierungssystems zur Verfügung zu stellen.

Diese Aufgabe wird gelöst von einem elektronischen Steuerungsgerät mit den Merkmalen des Patentanspruchs 1.

Ein derartiges elektronisches Steuerungsgerät weist eine Steuereinrichtung zum Ablauf eines Steuerungsprogramms zur Steuerung einer Anlage, sowie eine Anlagen-Schnittstelle zur Ausgabe von Anlagen-Steuerdaten an die Anlage und zum Empfang von Anlagendaten von der Anlage, auf. Das Steuerungsgerät ist zum Betrieb in einem ein- und ausschaltbaren Emulationsmodus zur Steuerung einer Anlagensimulation durch das Steuerungsprogramm eingerichtet und ausgebildet, wobei in dem Simulationsmodus eine von der Anlagen-Schnittstelle separate Emulations-Schnittstelle zur Ausgabe der Anlagen-Steuerdaten und zum Empfang von Daten von der Anlagen-Simulation vorgesehen ist.

Durch die Verwendung des gesonderten Emulationsmodus ist es möglich, mit dem elektronischen Steuerungsgerät und dem darauf installierten Steuerungsprogramms neben einer realen Anlagen-Steuerung auch eine Anlagensimulation zu steuern bzw. mit dieser zu interagieren. Eventuelle Anpassungen der Steuerung an die Anlagensimulation können beispielsweise im Rahmen des Emulationsmodus erfolgen. So kann beispielsweise über den Emulationsmodus eine entsprechende Zeitsteuerung des Ablaufs des Steuerungsprogramms erreicht werden, so dass die Anlagen-Simulation z.B. auf variable Weise mit dem elektronischen Steuerungsgerät zusammenarbeiten kann.

Ein elektronisches Steuerungsgerät kann dabei als eine speicherprogrammierbare Steuerung, eine modulare speicherprogrammierbare Steuerung oder auch ein PC oder Industrie-PC oder ein vergleichbares Steuerungsgerät ausgebildet und eingerichtet sein.

Die Anlagen-Schnittstelle kann beispielsweise eine drahtgebundene oder drahtlose Schnittstelle zum Datenaustausch mit der Anlage ausgebildet und eingerichtet sein. Anlagen-Schnittstellen können beispielsweise so genannte Feldbus-Schnittstellen oder auch Eingabe-Ausgabe-Baugruppen oder Anschlüsse solcher Baugruppen zum Verbinden mit entsprechenden Sensoren und Aktoren der gesteuerten Anlage sein.

Die Anlage kann beispielsweise ein zu steuerndes Gerät, eine Maschine oder auch eine Produktionsanlage sein, wobei die Ausgabe der Anlagen-Steuerdaten beispielsweise an Aktoren der Anlage, wie z.B. Schalter, Motoren oder Antriebe, erfolgt. Der Empfang der Anlagendaten erfolgt z.B. von entsprechenden Sensoren der Anlage.

Zum Betrieb des Emulationsmodus kann das elektronische Steuerungsgerät beispielsweise eine Emulations-Ablaufsteuerung umfassen, wobei die Emulations-Ablaufsteuerung beispielsweise als Hard- und/oder Softwaremodul ausgebildet sein kann.

Dabei kann der Emulationsmodus beziehungsweise das elektronische Steuerungsgerät derart ausgebildet und eingerichtet sein, dass bei eingeschaltetem Emulationsmodus keine Steuerdaten an die reale Anlage ausgegeben werden und/oder keine Steuerdaten an die reale Anlage ausgegeben werden können. Insbesondere kann im Emulationsmodus sichergestellt sein, dass keine Anlagen-Steuerdaten an die Anlage ausgegeben werden und/oder keine Steuerdaten an die reale Anlage ausgegeben werden können. Dies hat beispielsweise den Vorteil, dass eine gewisse Sicherheit bei der Anlagensimulation gegeben ist, da beim Testen eines Steuerungsprogrammes auf diese Weise dafür gesorgt wird, dass keine Ansteuerung der Anlage und damit verbundene mögliche Fehlfunktion im Rahmen des Testens des Steuerungsprogramms erfolgen kann.

Die Anlagensimulation kann beispielsweise als eine Software-Applikation zur Simulation der genannten Anlage oder auch zur Simulation von einem oder mehreren Teilen der Anlage ausgebildet und eingerichtet sein. Dabei kann die Anlagen-Simulation beispielsweise auf einem entsprechenden Rechner oder auch Simulationsmodul installiert sein und auch dort ablaufen.

Die Emulations-Schnittstelle kann als eine drahtgebundene oder drahtlose Kommunikations-Schnittstelle ausgebildet sein. So kann die Emulations-Schnittstelle beispielsweise als eine Ethernet- oder Feldbus-Schnittstelle oder auch WLAN-, Mobilfunk-, oder Bluetooth- Schnittstelle ausgebildet und eingerichtet sein.

Dass es sich bei der Emulations-Schnittstelle um eine von der Anlagen-Schnittstelle separate Schnittstelle handelt, kann bei einer drahtgebundenen Schnittstelle beispielsweise bedeuten, dass getrennte Anschlüsse für die Anlagen-Schnittstelle und die Emulations-Schnittstelle vorgesehen sind. Bei Drahtlos-Schnittstellen bedeutet dies beispielsweise, dass die Kommunikationspartner des elektronischen Steuerungsgeräts im angeschlossenen Kommunikationsnetz bei der Anlagen-Schnittstellen-Kommunikation unterschiedlich von denen bei der Emulations-Schnittstellen-Kommunikation sind. Beispielsweise können die Emulations-Schnittstelle und die Anlagen-Schnittstelle auch unterschiedliche Protokollstacks aufweisen.

Dadurch, dass die Anlagenschnittstelle separat, getrennt oder unabhängig von der Emulations-Schnittstelle ist, kann erreicht werden, dass entsprechend darüber ein- und ausgehende Daten unabhängig voneinander der Anlage bzw. der Anlagensimulation zugeleitet werden können, ohne dass die Anlage bzw. deren Simulation beim Wechsel zwischen Simulations-Steuerung und realer Anlagensteuerung hardwaremäßig getrennt bzw. angeschlossen werden müssen. Dies ermöglicht eine einfachere Simulation der Anlage, indem beispielsweise eine Änderung des Steuerungsprogramms mit der Simulation einfach getestet und dann relativ schnell auch zur realen Steuerung der Anlage gewechselt werden kann, z.B. ohne Kabelverbindungen trennen und/oder neu aufbauen zu müssen.

Die Ausgabe der Anlagen-Steuerdaten im Emulationsmodus erfolgt an die Anlagen-Simulation, während der Empfang der Daten von der Anlagen-Simulation über die Emulations-Schnittstelle erfolgt.

In einer vorteilhaften Ausgestaltung ist das elektronische Steuerungsgerät derart ausgebildet und eingerichtet, dass bei eingeschaltetem Emulationsmodus die Anlagen-Schnittstelle deaktiviert ist oder wird. Auf diese Weise kann sichergestellt werden, dass beim Ablauf des Steuerungsprogramms keine Steuerdaten über die Anlagen-Schnittstelle an die reale Anlage ausgegeben werden können. Auf diese Weise kann beispielsweise beim Testen eines Steuerungsprogramms erschwert oder verhindert werden, dass fehlerhafte Daten, bzw. eine Fehlfunktion oder gefährliche Funktion bewirkende Daten, an die Anlage ausgegeben werden.

Auch dies vereinfacht die Simulation einer Anlage, da auf diese Weise mit weniger Risiko ein Steuerungsprogramm getestet und optimiert werden kann und so beispielsweise weitere Sicherungsmaßnahmen oder auch der Aufwand für entsprechende Hardware-Änderungen oder Entkopplungen reduziert werden kann.

Dabei kann das Steuerungsgerät beispielsweise derart eingerichtet und ausgebildet sein, dass beim Einschalten des Emulationsmodus die Anlagen-Schnittstelle deaktiviert wird. Weiterhin kann das Steuerungsgerät derart ausgebildet und eingerichtet sein, dass beim Ausschalten des Emulationsmodus die Anlagen-Schnittstelle aktiviert wird.

Des Weiteren kann vorgesehen sein, dass beim Einschalten des Emulationsmodus die Emulations-Schnittstelle aktiviert wird und/oder beim Ausschalten des Emulationsmodus die Emulations-Schnittstelle deaktiviert wird. So kann beispielsweise vorgesehen sein, dass bei ausgeschaltetem Emulationsmodus die Emulations-Schnittstelle deaktiviert ist.

Weiterhin kann das elektronische Steuerungsgerät derart ausgebildet und eingerichtet sein, dass die Emulations-Schnittstelle und/oder das Steuerungsgerät im Emulationsmodus zudem zum Empfang von Simulations-Steuerungsdaten zur Kontrolle des Emulationsmodus von einer Emulations-Koordinations-Applikation ausgebildet und eingerichtet ist. Dabei kann die Emulations-Koordinations-Applikation zur zeitlichen Synchronisation des Steuerungsgeräts mit der Anlagen-simulation eingerichtet und ausgebildet sein, wobei die empfangenen Simulations-Steuerungsdaten beispielsweise zur Kontrolle bzw. Steuerung des zeitlichen Ablaufs des Emulationsmodus im elektronischen Steuerungsgerät vorgesehen sein können. Auf diese Weise kann beispielsweise der Ablauf des Steuerungsprogramms im Emulationsmodus über die Simulations-Steuerungsdaten von der Emulations-Koordinations-Applikation gesteuert und/oder beeinflusst werden.

Weiterhin kann auch die Ausgabe von Simulations-Daten von Steuerungsgerät über die Emulations-Schnittstelle an die Emulations-Koordinations-Applikation vorgesehen sein. Auf diese Weise kann beispielsweise das Steuerungsgerät im Emulationsmodus, bzw. eine entsprechende Emulations-Ablaufsteuerung im Steuerungsgerät, Informationen über den aktuellen Status der Steuerung bzw. des Steuerungsprogramms, wie z. B. das Erreichen bestimmter Anlagen-Zustände, Fehlermeldungen, das Erreichen bestimmter Simulations-Zeiten oder Zeitabschnitte oder ähnlicher Informationen an die Emulations-Koordinations-Applikation ausgeben.

So kann die Emulations-Koordinations-Applikation wiederum die notwendigen Informationen erhalten, um beispielsweise das Steuerungsgerät besser und einfacher mit der Anlagensimulation koordinieren zu können bzw. die Simulation flexibler und beispielsweise von einem Anwender besser beeinflussbar ablaufen lassen zu können.

Dabei kann das Steuerungsgerät im Emulationsmodus bzw. eine eventuell vorgesehene Emulations-Ablaufsteuerung derart ausgebildet und eingerichtet sein, dass im Emulationsmodus die Steuerung des zeitlichen Ablaufs des Steuerungsprogramms durch die Emulations-Koordinations-Applikation erfolgt. Dabei kann der Zeitablauf des Steuerungsprogramms beispielsweise in einer virtuellen, von der Emulations-Koordinations-Applikation vorgegebenen Zeit erfolgen, die beispielsweise schneller, langsamer oder auch variabel verglichen mit der Echtzeit ablaufen kann. Weiterhin kann beispielsweise auch ein Ablauf des Anwenderprogramms in bestimmten Zeitscheiben oder auch Zeitschritten vorgesehen sein. Weiterhin kann auch im Emulationsmodus der Zeitablauf des Steuerungsprogramms in Echtzeit erfolgen.

Auf diese Weise erhält man eine weiterhin vereinfachte Simulation eines Automatisierungs-Systems, da auf diese Weise gezielt Änderungen beobachtet oder auch Standard-Funktionalitäten beschleunigt werden können.

Das elektronische Steuerungsgerät bei eingeschaltetem Emulationsmodus bzw. eine gegebenenfalls dafür vorgesehene Emulations-Ablaufsteuerung im Steuerungsgerät kann weiterhin derart ausgebildet und eingerichtet sein, dass die Kommunikation des elektronischen Steuerungsgeräts über die Emulations-Schnittstelle mit der Emulations-Koordinations-Applikation erfolgt. Unter der vorstehend genannten Kommunikation ist hierbei die emulations- oder steuerungs-relevante Kommunikation gemeint.

Zwischen Steuerungsgerät und Emulations-Koordinations-Applikation können ggf. Netzkomponenten wie beispielsweise Switches, Bridges, Hubs oder Ähnliche vorhanden sein. Dabei kann weiterhin vorgesehen sein, dass die Emulations-Koordinations-Applikation auch die Kommunikation mit der Anlagen-Simulation übernimmt, ggf. auch mit weiteren Simulationen und/oder Geräten.

Die Übertragung der Steuerungsdaten vom Steuerungsgerät zur Anlagen-Simulation und Übertragung der Anlagen-Daten von der Simulation zum Steuerungsgerät kann dabei ebenfalls über die Emulations-Koordinations-Applikation erfolgen. Es kann alternativ auch vorgesehen sein, dass die reine DatenKommunikation zwischen Steuerungsgerät und Anlagen-Simulation unmittelbar zwischen beiden Komponenten erfolgt.

In einer vorteilhaften Ausgestaltung kann das elektronische Steuerungsgerät als eine speicherprogrammierbare Steuerung ausgebildet und eingerichtet sein, wobei die Anlagen-Schnittstelle als eine I/O-Schnittstelle zur Kommunikation mit einem Sensor oder Aktor der Anlage und/oder eine Peripherie-Schnittstelle zur Kommunikation mit einer dezentralen Peripherie-Einheit umfasst.

Die I/O-Schnittstelle kann beispielsweise als eine digitale oder analoge Schnittstelle zur Kommunikation mit einem Sensor oder Aktor der Anlage ausgebildet und eingerichtet sein. Aktoren können beispielsweise Antriebe, Motoren, Schalter oder ähnliche elektrisch ansteuerbare Komponenten sein. Die Peripherie-Schnittstelle kann beispielsweise als sogenannte Profinet-IO, Profibus DP oder vergleichbare Schnittstelle entsprechender Feldbus- oder vergleichbarer Protokolle zur Kommunikation der speicherprogrammierbaren Steuerung mit einer entsprechenden dezentralen Peripherie-Einheit ausgebildet und eingerichtet sein.

Weiterhin kann das elektronische Steuerungsgerät als Steuerungsmodul einer modularen speicherprogrammierbaren Steuerung ausgebildet und eingerichtet sein. In diesem Fall kann dann die Anlagen-Schnittstelle als eine Schnittstelle des Steuerungsmoduls zu einem Rückwandbus der modularen speicherprogrammierbaren Steuerung ausgebildet und eingerichtet sein. Als Steuerungsmodul kann beispielsweise ein so genanntes CPU-Modul oder eine so genannte Zentraleinheit oder auch jedes Modul einer speicherprogrammierbaren Steuerung verstanden werden, welches zum Ablauf eines Steuerungsprogramms ausgebildet und eingerichtet ist.

Der Rückwandbus der speicherprogrammierbaren Steuerung ist zur Kommunikation verschiedener Module der modularen speicherprogrammierbaren Steuerung ausgebildet und eingerichtet, wobei der Rückwandbus beispielsweise aktiv oder passiv ausgestaltet sein kann. Er kann weiterhin z.B. selbstaufbauend oder als vorinstallierter Bus ausgebildet sein.

Die vorstehende Aufgabe wird auch gelöst durch ein Verfahren zum Betrieb eines elektronischen Steuerungsgeräts gemäß der vorliegenden Beschreibung, wobei innerhalb des Verfahrens die folgenden Schritte ablaufen:
a) Ablauf des Steuerungsprogramms zur Steuerung der Anlage, wobei die Anlagen-Daten zur Steuerung der Anlage über die Anlagen-Schnittstelle ausgegeben werden und die Anlagendaten für das Steuerungsprogram über die Anlagen-Schnittstelle empfangen werden;
b) Umschalten des Steuerungsgeräts in den Emulationsmodus;
c) Ablauf des Steuerungsprogramms zur Steuerung der Anlagen-Simulation, wobei die Anlagen-Daten zur Steuerung der Anlagen-Simulation über die Emulations-Schnittstelle ausgegeben werden und die Daten für das Steuerungsprogramm über die Emulations-Schnittstelle empfangen werden.

In einer vorteilhaften Ausgestaltung kann weiterhin vorgesehen sein, dass beim oder nach dem Umschalten des Steuerungsgeräts in den Emulationsmodus die Anlagen-Schnittstelle deaktiviert wird.

Vorteilhafte Ausgestaltungen ergeben sich aus den Unteransprüchen.

Nachfolgend wird die vorliegende Erfindung beispielhaft mit Bezug auf die beiliegenden Figuren näher erläutert.

Es zeigen:
- Figur 1:: Beispiel für eine speicherprogrammierbare Steuerung mit einer dadurch gesteuerten Anlage;
- Figur 2:: Die in Figur 1 dargestellte speicherprogrammierbare Steuerung zur Steuerung einer Anlagensimulation.

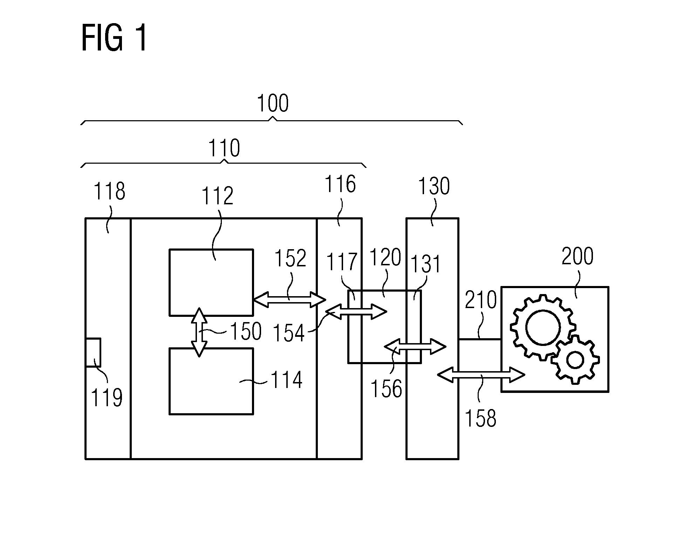

Figur 1 zeigt eine speicherprogrammierbare Steuerung (SPS) 100 mit einem zentraleinheits- oder CPU-Modul 110 und einem Eingabe- Ausgabe- oder I/O-Modul 130 zur Steuerung einer Maschine 200, welche über Anschlussleitungen 210 mit dem I/O-Modul 130 verbunden ist.

Das CPU-Modul 110 umfasst einen Steuerungs- oder Code-Baustein 112, in welchem unter Anderem das Steuerungsprogramm zur Steuerung der Maschine 200 abläuft. Zwischen dem Steuerungsbaustein 112 und einem Datenbaustein 114 besteht eine Datenkommunikation 150, über welche das Steuerungsprogramm Zugriff auf die im Datenbaustein 114 gespeicherten Daten hat bzw. über welche der Steuerungsbaustein 112 Daten im Datenbaustein 114 ablegen kann.

Weiterhin umfasst das CPU-Modul 110 ein Prozess-Abbild 116, in welchem über eine Datenkommunikation 152 alle zur Steuerung der Maschine 200 notwendigen Ausgangsdaten des im Steuerbaustein 112 ablaufenden Steuerungsprogramms abgelegt werden. Weiterhin werden im Prozess-Abbild 116 auch alle von der Maschine 200 an die SPS 100 übertragenen Anlagen Daten, welche vom Steuerungsprogramm für eine korrekte Steuerung der Maschine 200 benötigt werden, abgelegt.

Beim zyklischen Ablauf des Steuerungsprogramms werden dann nach Ablauf eines Programmzyklus alle Steuerungsdaten für die Maschine 200 vom Steuer-Baustein 112 in das Prozessabbild 116 geschrieben, dann die im Prozess-Abbild 116 gespeicherten Zustandsdaten der Maschine 200 in den Steuerungsbaustein 112 geladen und ein erneuter Ablauf des Steuerungsprogramms gestartet. Dieses Einschreiben und Auslesen der Daten in und aus dem Prozess-Abbild 116 erfolgt zyklisch nach jedem Ablauf eines Zyklus des Steuerungsprogramms.

Die SPS 100 weist einen Rückwandbus 120 auf, über welchen das CPU-Modul 110 mit dem I/O-Modul 130 kommunizieren kann. Über eine Rückwandbus-Schnittstelle 117 des CPU-Moduls 110 kann dann eine Kommunikation 154 des CPU-Moduls 110 auf den Rückwandbus 120 erfolgen. Das I/O-Modul 130 weist ebenfalls eine Rückwandbus-Schnittstelle 131 auf, über welche eine Kommunikation 156 zwischen I/O-Modul und Rückwandbus 120 erfolgt. Über die Anschlussleitungen 210 erfolgt dann die Kommunikation 158 des I/O-Moduls mit der Maschine 200, über welche sowohl die Steuerdaten vom I/O-Modul 130 an die Maschine 200 übertragen werden als auch die Zustandsdaten bzw. Sensordaten der Maschine 200 zum I/O-Modul 130 zurückübertragen werden.

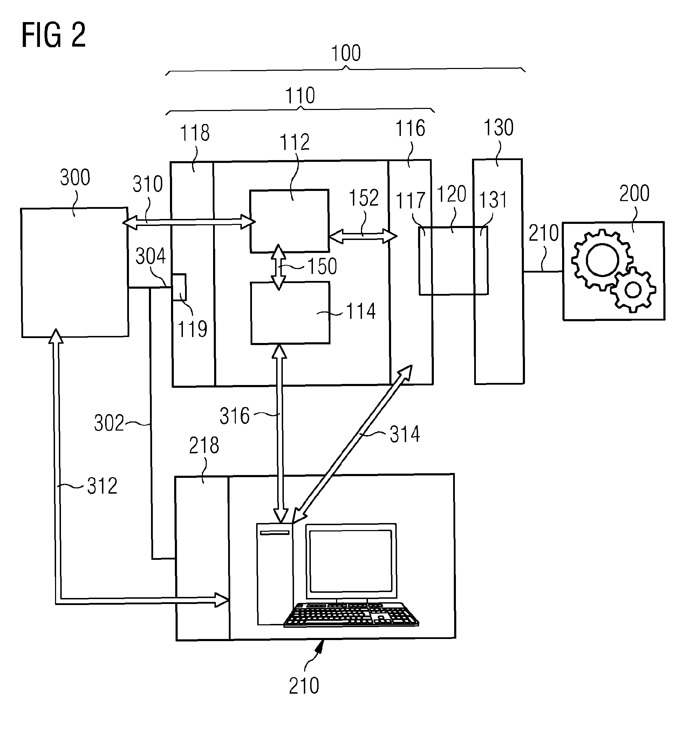

Weiterhin umfasst das CPU-Modul 110 eine Emulations-Ablauf-Steuerung 118, welche zur Steuerung eines Emulations-Modus des CPU-Moduls 110 ausgebildet und eingerichtet ist. Die Funktionsweise der Emulations-Ablaufsteuerung 118 wird näher in Zusammenhang mit Figur 2 erläutert.

Das CPU-Modul 110 umfasst zudem eine Ethernet-Schnittstelle 119 zur Verbindung mit einer Ethernet-Anschlussleitung.

Figur 2 zeigt die speicherprogrammierbare Steuerung 100 wie in Figur 1 bereits dargestellt und in diesem Zusammenhang erläutert zur Steuerung einer Anlagen-Simulation 210. Dabei ist die Anlagen-Simulation 210 auf einem PC installiert und simuliert die in Figur 1 dargestellte Anlage 200. Die Anlagensimulation 210 weist eine Simulations-Ablaufsteuerung 218 auf, welche den zeitlichen Ablauf des Simulationsprogramms steuert. Weiterhin zeigt Figur 2 eine Emulations-Koordinations-Applikation 300, welche z.B. auf einem externen Rechner installiert ist und welche den Ablauf des Steuerungsprogramms im Steuerungsbaustein 112 des CPU-Modul 110 und die Anlagen-Simulation 210 steuert und synchronisiert.

Dazu ist die Emulations-Koordinations-Applikation 300 über ein Ethernet-Kabel 304 mit dem CPU-Modul 110 verbunden. Weiterhin ist die Emulations-Koordinations-Applikation 300 auch über ein Ethernet-Kabel 302 mit der Simulations-Applikation 210 bzw. dem Rechner, auf welchem diese installiert ist, verbunden.

Im in Figur 2 dargestellten Simulations-Modus der CPU 110 ist die in Figur 1 dargestellte Kommunikation 154 zwischen dem CPU-Modul 110 und dem Rückwandbus 120 deaktiviert, was beispielsweise durch eine Deaktivierung der Rückwandbus-Schnittstelle 117 erreicht werden kann. Dadurch entfällt im Simulations-Modus auch die Kommunikation 156 zwischen Rückwandbus 120 und I/O-Modul 130 sowie die Kommunikation 158 zwischen I/O-Modul 130 und Anlage 200 über die Anschlussleitungen 210.

Anstatt, wie im normalen Steuerungsmodus der CPU 110, das Steuerungsprogramm im Steuerungs-Baustein 110 in Echtzeit ablaufen zu lassen, erfolgt der Ablauf des Steuerungsprogramms im Steuerungsbaustein 112 im Emulations-Modus der CPU 110 in einer virtuellen Zeit. Dabei wird die Steuerung dieser virtuellen Zeit bzw. des Ablaufs des Steuerungsprogramms z.B. von der Emulations-Ablauf-Steuerung 118 der CPU 110 übernommen. Desgleichen erfolgt der Ablauf der Anlagensimulation 210 ebenfalls in einer virtuellen Zeit, welche von der Ablaufsteuerung 218 der Anlagen-Simulation 210 gesteuert wird.

Um die CPU 110 im Emulations-Modus sowie die Anlagen-Simulation 210 korrekt synchronisiert ablaufen zu lassen, wird die virtuelle Zeit bzw. die Zeitsteuerung von der Emulations-Koordinations-Applikation 300 vorgegeben und synchronisiert. Dies erfolgt über eine Kommunikation 310 zwischen Emulations-Koordinations-Applikation 300 und dem Steuerungsbaustein 112 im Emulations-Modus der CPU 110 sowie eine Kommunikation 312 zwischen der Emulations-Koordinations-Applikation 300 und der Anlagensimulation 210.

Dabei kann der synchronisierte Ablauf des CPU-Moduls 110 und der durch diese gesteuerten Anlagensimulation 210 beispielsweise in so genannten Zeitscheiben oder auch einer kontinuierlich fortschreitenden virtuellen Zeit ablaufen, wobei die virtuelle Zeit beispielsweise auch von einem Benutzer des Systems variabel einstellbar sein kann, um beispielsweise bestimmte Vorgänge genauer beobachten zu können oder auch beispielsweise Standardprozesse zu beschleunigen.

Über die Ethernet-Leitungen 304 und 302 ist weiterhin eine Kommunikation 314 des Datenbausteins 114 der CPU 110 mit der Anlagensimulation 210 sowie eine Kommunikation 314 des Prozessabbildes 116 des CPU-Moduls 110 mit der Anlagen-Simulation 210 möglich. Auf diese Weise kann die Anlagensimulation 210 durch das CPU-Modul 110 im Emulations-Modul analog der Steuerung der realen Anlage 200 im realen Modus gesteuert werden.

Dabei werden, wie vorstehend beschrieben, durch das Steuerungsprogramm die Daten zyklisch im Prozess-Abbild 116 gelesen und dorthin geschrieben. Über die symbolisch in Figur 2 als Pfeil 314 dargestellte Kommunikation zwischen Prozessabbild 116 und Anlagensimulation 210 werden die Steuerdaten für die Anlagensimulation 210 aus dem Prozessabbild in die Anlagensimulation übertragen und die Anlage unter Verwendung dieser Steuerdaten simuliert. Die aus der Anlagensimulation 210 sich ergebenden Sensor und Zustandsdaten werden über die Kommunikation 214 an das Prozessabbild 116 zurückübertragen und so beim nächsten Zyklus des Steuerungsprogramms berücksichtigt.

Wie bereits erwähnt, sind die Kommunikationspfeile 314 und 316 eine symbolische Darstellung der Kommunikation zwischen den jeweiligen Partnern. Die physikalische Kommunikation erfolgt über die Ethernet-Schnittstelle 119 des CPU-Moduls 110 und die Ethernet-Leitungen 304 und 302 zwischen dem CPU-Modul 110 und der Anlagensimulation 210.

Auf die vorstehend dargestellte Weise ist es möglich, im Emulationsmodus des CPU-Moduls 110 das gleiche Steuerungsprogramm, gleichartig zum Normalmodus bei einer realen Anlagensteuerung, ablaufen zu lassen - nur unter Verwendung einer virtuellen Zeit. Durch die Deaktivierung der Kommunikation des CPU-Moduls 110 über den Rückwandbus 120 und damit zur Anlage 200 können auf diese Weise beispielsweise Steuerungsprogramme eingerichtet, geändert oder getestet werden, ohne dass die zu steuernde Anlage 200 real vorhanden sein muss bzw. ohne die Anlage 200 durch Steuerungsfehler zu gefährden.

Nach dem Einrichten, Ändern und/oder Testen eines Steuerungsprogramms im CPU-Modul 110 durch virtuelle Steuerung der Anlagensimulation 210 kann dann beispielsweise vom Emulations-Modus des CPU-Moduls 110 wieder auf den Normalmodus des CPU-Moduls 110 umgeschaltet werden und die reale Anlage 200 unter Verwendung dieses Steuerprogramms gesteuert werden. Beim Auftreten von Fehlern oder auch bei weiteren Änderungen des Steuerprogramms kann dann beispielsweise wieder in den Emulations-Modus mit der Anlagensimulation 210 zurückgeschaltet werden, um die Fehler zu beheben bzw. Änderungen vorzunehmen und zu testen.

## Patentansprüche

1. Elektronisches Steuerungsgerät (100) mit einer Steuereinrichtung (110) zum Ablauf eines Steuerungsprogramms zur Steuerung einer Anlage (200) und mit einer Anlagen-Schnittstelle (117, 130) zur Ausgabe von Anlagen-Steuerdaten an die Anlage (200) und zum Empfang von Anlagendaten von der Anlage (200),
**dadurch gekennzeichnet,**
**dass** das Steuerungsgerät (100) zum Betrieb in einem ein- und ausschaltbaren Emulationsmodus zur Steuerung einer Anlagensimulation (210) durch das Steuerungsprogramm eingerichtet und ausgebildet ist, wobei in dem Emulationsmodus eine von der Anlagen-Schnittstelle (117, 130) separate Emulations-Schnittstelle (119) zur Ausgabe der Anlagen-Steuerdaten und zum Empfang von Daten von der Anlagensimulation (210) vorgesehen ist.

2. Elektronisches Steuerungsgerät nach Anspruch 1,
**dadurch gekennzeichnet,**
**dass** bei eingeschaltetem Emulationsmodus die Anlagen-Schnittstelle (117, 130) deaktiviert ist.

3. Elektronisches Steuerungsgerät nach Anspruch 1 oder 2,
**dadurch gekennzeichnet,**
**dass** die Emulations-Schnittstelle (119) weiterhin zum Empfang von Simulations-Steuerungsdaten zur Kontrolle des Emulationsmodus von einer Emulations-Koordinations-Applikation (300) ausgebildet und eingerichtet ist.

4. Elektronisches Steuerungsgerät nach Anspruch 3,
**dadurch gekennzeichnet,**
**dass** bei eingeschaltetem Emulationsmodus die Steuerung des zeitlichen Ablaufs des Steuerungsprogramms durch die Emulations-Koordinations-Applikation (300) erfolgt.

5. Elektronisches Steuerungsgerät nach Anspruch 3 oder 4,
**dadurch gekennzeichnet,**
**dass** bei eingeschaltetem Emulationsmodus die Kommunikation des elektronischen Steuerungsgeräts (100) über die Emulations-Schnittstelle (119) mit der Emulations-Koordinations-Applikation (300) erfolgt.

6. Elektronisches Steuerungsgerät nach einem der vorhergehenden Ansprüche,
**dadurch gekennzeichnet,**
**dass** das elektronische Steuerungsgerät (100) als eine Speicherprogrammierbare Steuerung ausgebildet und eingerichtet ist und wobei die Anlagen-Schnittstelle (117, 130) eine I/O-Schnittstelle (130) zur Kommunikation mit einem Sensor oder Aktor der Anlage (200) und/oder eine Peripherie-Schnittstelle zur Kommunikation mit einer dezentralen Peripherie-Einheit umfasst.

7. Elektronisches Steuerungsgerät nach einem der vorhergehenden Ansprüche,
**dadurch gekennzeichnet,**
**dass** das elektronische Steuerungsgerät (100) als Steuerungsmodul einer modularen Speicherprogrammierbaren Steuerung ausgebildet und eingerichtet ist und die Anlagen-Schnittstelle (117, 130) eine Schnittstelle (117) des Steuerungsmoduls zu einem Rückwandbus (120) der modularen Speicherprogrammierbaren Steuerung umfasst.

8. Verfahren zum Betrieb eines elektronischen Steuerungsgeräts (100), wobei das elektronische Steuerungsgerät (100) gemäß einem der vorstehenden Ansprüche ausgebildet und eingerichtet ist,
**gekennzeichnet durch** die Schritte:
a)Ablauf des Steuerungsprogramms zur Steuerung der Anlage (200), wobei die Anlagen-Daten zur Steuerung der Anlage (200) über die Anlagen-Schnittstelle (117, 130) ausgegeben werden und die Anlagendaten für das Steuerungsprogramm über die Anlagen-Schnittstelle (117, 130) empfangen werden;
b) Umschalten des Steuerungsgeräts (100) in den Emulationsmodus;
c)Ablauf des Steuerungsprogramms zur Steuerung der Anlagensimulation (210), wobei die Anlagen-Daten zur Steuerung der Anlagensimulation (210) über die Emulations-Schnittstelle (119) ausgegeben werden und die Daten für das Steuerungsprogramm über die Emulations-Schnittstelle (119) empfangen werden.

9. Verfahren gemäß Anspruch 8,
**dadurch gekennzeichnet,**
**dass** beim oder nach dem Umschalten des Steuerungsgeräts (100) in den Emulationsmodus die Anlagen-Schnittstelle (117, 130) deaktiviert wird.
